# EUROPÄISCHE PATENTANMELDUNG

(11) **EP 2 159 538 A1**
(43) Veröffentlichungstag der Anmeldung: **03.03.2010**
(21) Anmeldenummer: 08015233.3
(22) Anmeldetag: 28.08.2008
(51) Int. Cl.: G01B 11/25, G01N 21/89

(54) **Vorrichtung und Verfahren zur Orts- und/oder Formbestimmung eines Objekts**

(71) Anmelder: Omnitron AG, 64347 Griesheim (DE)
(72) Erfinder: Olbrecht, Torsten, 67240 Bobenheim-Roxheim (DE); Rauscher, Benedikt, 61440 Oberursel (DE); Tabel, Ernst, 22337 Hamburg (DE)
(74) Vertreter: Schiffer, Axel Martin

(57) **Zusammenfassung**

Die Erfindung betrifft eine Vorrichtung zur Orts- und/oder Formbestimmung von Objekten in einem Überwachungsbereich nach dem Prinzip des Lichtschnitts, mit einer Mehrzahl von Sendemodulen zum Strahlen eines Lichtmusters auf ein zu überprüfendes Objekt, mit mindestens einer ortsauflösenden Detektoreinrichtung zum Nachweisen von von dem Objekt zurückgestrahlten Licht, mit einer Steuer- und Auswerteeinrichtung zum Ansteuern der Sendemodule und zum Auswerten des von der Detektoreinrichtung nachgewiesenen Lichts. Die Vorrichtung ist **dadurch gekennzeichnet, dass** die Sendemodule jeweils mindestens zwei Lichtquellen aufweisen, die Licht mit unterschiedlicher Wellenlänge aussenden, dass die Sendemodule zum Vereinigen des Lichts der Lichtquellen auf einen gemeinsamen Strahlengang jeweils mindestens einen Strahlteiler aufweisen und dass zum Leiten des Lichts der verschiedenen Lichtquellen auf dem gemeinsamen Strahlengang in den Überwachungsbereich und zum Bilden des Lichtmusters optische Strahlformungs- und/oder Strahlumlenkmittel vorhanden sind. Die Erfindung betrifft außerdem ein Verfahren zur Orts- und/oder Formbestimmung von Objekten in einem Überwachungsbereich.

## Beschreibung

Die vorliegende Erfindung bezieht sich in einem ersten Aspekt auf eine Vorrichtung zur Orts- und/oder Formbestimmung eines Objekts nach dem Oberbegriff des Anspruchs 1.

In einem zweiten Gesichtspunkt betrifft die Erfindung ein Verfahren zur Orts- und/oder Formbestimmung eines Objekts nach dem Oberbegriff des Anspruchs 11.

Eine gattungsgemäße Vorrichtung ist beispielsweise aus US-6,542,249 bekannt und weist eine Mehrzahl von Sendemodulen zum Strahlen eines Lichtmusters auf ein zu prüfendes Objekt, mindestens eine ortsauflösende Detektoreinrichtung zum Nachweisen von von dem Objekt zurückgestrahltem Licht und eine Steuer- und Auswerteeinrichtung zum Ansteuern der Sendemodule und zum Auswerten des von der Detektoreinrichtung nachgewiesenen Lichts auf.

Bei einem gattungsgemäßen Verfahren, welches ebenfalls aus US-6,542,249 bekannt ist, wird mit einer Mehrzahl von Sendemodulen ein Lichtmuster auf ein zu prüfendes Objekt in einen Überwachungsbereich gestrahlt, von dem Objekt zurückgestrahltes Licht wird mit mindestens einer ortsauflösenden Detektoreinrichtung nachgewiesen und auf Grundlage des nachgewiesenen Lichts wird nach dem Prinzip des Lichtschnitts eine Oberflächenkontur des Objekts bestimmt.

Vorrichtungen der genannten Art, die ganz allgemein der zwei- oder dreidimensionalen Vermessung von Objekten mit Kamerasystemen dienen, werden beispielsweise in der industriellen Fertigungs- und Automatisierungstechnik für eine Vielzahl von Aufgabenstellungen eingesetzt. Beispielsweise kann vor dem Einsetzen einer Autotür in eine Karosserie geprüft werden, ob der Türspalt, also der Abstand der Tür zu einer umgebenden Profilierung der Karosserie, umlaufend die gewünschte Konstanz aufweist. Hierauf wird in der Automobilindustrie großer Wert gelegt.

Hierbei führt ein erster Roboter die einzusetzende Tür an die Karosserie heran. Ein zweiter Roboter trägt einen Lichtschnittsensor, mit welchem umlaufend der Türspalt geprüft wird. Die Tür wird dann so eingerichtet, bis der Türspalt umlaufend möglichst konstant ist. Erst dann wird die Tür montiert.

Eine besondere Problemstellung kann sich ergeben, wenn die zu überprüfenden Objekte eine bestimmte Farbe aufweisen, welche dazu führt, dass das Licht der Sendemodule nicht in ausreichendem Maß zurückgestrahlt wird. Beispielsweise wäre dies der Fall, wenn grüne Objekte untersucht werden sollen mit einem Sensor, welcher rotes Licht aussendet. Das rote Licht würde dann von dem grünen Objekt weitgehend absorbiert und nur in geringem Umfang zurückgestrahlt werden.

Aus fertigungstechnischen Gründen werden in der Automobilindustrie derzeit Autotüren noch im unlackierten Zustand in die Karosserie eingesetzt. Es ist jedoch daran gedacht, dieses Verfahren dahingehend zu ändern, dass bereits lackierte Türen in die ebenfalls bereits lackierten Karosserien eingesetzt werden. Bei bestimmten Lackfarben könnten dann bisher verwendete Sensoren zur Bestimmung des Türspalts wegen der unzureichenden Rückstrahlung nicht mehr eingesetzt werden. Da bekannte Sensoren häufig mit rotem Licht arbeiten, könnte dementsprechend der Türspalt bei grünen Autotüren nur schlecht geprüft werden. Da meistens nicht in Reflexionsgeometrie gemessen wird, sind auch stark spiegelnde oder glänzende Flächen, beispielsweise glänzend lackierte Oberflächen, problematisch.

Als eine **Aufgabe** der Erfindung kann angesehen werden, eine Vorrichtung der oben genannten Art zu schaffen und ein Verfahren der genannten Art anzugeben, mit welchen Objekte möglichst weitgehend unabhängig von deren Farbe geprüft werden können. Außerdem soll eine leichte Überprüfbarkeit einer korrekten Arbeitsweise der Vorrichtung und des Verfahrens gegeben sein.

Diese Aufgabe wird durch die Vorrichtung mit den Merkmalen des Anspruchs 1 und durch das Verfahren mit den Merkmalen des Anspruchs 11 gelöst.

Vorteilhafte Ausgestaltungen der erfindungsgemäßen Vorrichtung und bevorzugte Varianten des erfindungsgemäßen Verfahrens sind Gegenstand der abhängigen Ansprüche und werden außerdem in der folgenden Beschreibung, insbesondere im Zusammenhang mit den beigefügten Figuren, beschrieben.

Die Vorrichtung der oben genannten Art ist erfindungsgemäß dadurch weitergebildet, dass die Sendemodule jeweils mindestens zwei Lichtquellen aufweisen, die Licht mit unterschiedlicher Wellenlänge aussenden, dass die Sendemodule zum Vereinigen des Lichts der Lichtquellen auf einen gemeinsamen Strahlengang jeweils mindestens einen Strahlteiler aufweisen und dass zum Leiten des Lichts der verschiedenen Lichtquellen auf dem gemeinsamen Strahlengang in den Überwachungsbereich und zum Bilden des Lichtmusters optische Strahlformungs- und/oder Strahlumlenkmittel vorhanden sind.

Das Verfahren der oben genannten Art ist erfindungsgemäß dadurch weitergebildet, dass die Sendemodule jeweils Licht mit mindestens zwei verschiedenen Wellenlängen aussenden und dass das Licht mit den mindestens zwei verschiedenen Wellenlängen auf einem gemeinsamen Strahlengang auf das Objekt geleitet wird.

Als ein Kerngedanke der Erfindung kann angesehen werden, nicht mehr nur Licht einer einzigen Wellenlänge, sondern von vornherein mehrere Wellenlängen zu verwenden und auf das zu prüfende Objekt zu strahlen. Man hat so bei der Auswertung grundsätzlich mehr Möglichkeiten.

Als eine weitere Grundidee der Erfindung kann erachtet werden, die verschiedenen Wellenlängen auf ein und demselben optischen Strahlengang in den Überwachungsbereich zu leiten. Einerseits können die Aufbauten auf diese Weise kompakt gehalten werden, andererseits sind die Strahlungsbestandteile in geometrischer Hinsicht gleichwertig und, falls sinnvoll, kann bei der Auswertung leicht von einer Wellenlänge auf eine andere Wellenlänge übergegangen werden.

Umfangreiche Tests, die bei Vorarbeiten der Erfindung durchgeführt wurden, ergaben, dass das Rückstreuverhalten bei nichtsichtbarem Licht wesentlich weniger von der Farbe des Objekts abhängt als bei sichtbarem Licht. Bei einer besonders bevorzugten Ausgestaltung der erfindungsgemäßen Vorrichtung weist deshalb jedes der Sendmodule eine Lichtquelle, die nichtsichtbares Licht aussendet, und eine Lichtquelle, die sichtbares Licht aussendet, auf.

Entsprechend wird bei einer vorteilhaften Variante des erfindungsgemäßen Verfahrens nur nichtsichtbares Licht nachgewiesen und für die Auswertung verwendet. Mit Hilfe der erfindungsgemäßen Vorrichtung und des erfindungsgemäßen Verfahrens können demgemäß Oberflächen, die im sichtbaren Bereich spiegelnd sind oder bestimmte Wellenlängen sehr stark absorbieren, deutlich besser untersucht werden.

Das Licht der sichtbaren Lichtquelle kann besonders vorteilhaft verwendet werden, um den Sensor, also die erfindungsgemäße Vorrichtung, geeignet zu justieren oder auszurichten. Außerdem hat ein Benutzer durch das sichtbare Licht immer eine zuverlässige optische Kontrollmöglichkeit, ob der Sensor richtig positioniert ist, da erfindungsgemäß die Strahlung der verschiedenen Wellenlängen auf ein- und demselben Strahlengang auf das Objekt geleitet wird.

Grundsätzlich können als Quellen für das nichtsichtbare Licht auch Ultraviolett-Lichtquellen eingesetzt werden. Besonders bevorzugt werden jedoch Infrarotquellen verwendet.

Um das Signal-Rausch-Verhältnis zu steigern, kann vor der Detektoreinrichtung ein wellenlängenselektiver Bandpassfilter angeordnet sein.

Prinzipiell kann für jede Lichtquelle eines Sendemoduls eine eigene Kollimationsoptik vorhanden sein. Bei einer besonders vorteilhaften Ausgestaltung der erfindungsgemäßen Vorrichtung ist in den Sendemodulen jeweils eine dem Strahlteiler nachgeordnete Kollimationslinse vorhanden. Separate Kollimationslinsen für die einzelnen Lichtquellen sind dann nicht mehr notwendig. Der Aufbau der Sendemodule kann noch kompakter gehalten werden und ist damit für einen Mehrfachlinienprojektor, also eine Anordnung, bei der eine Vielzahl von Sendemodulen ein Lichtmuster auf ein zu prüfendes Objekt strahlt, besonders gut geeignet. Außerdem kann durch die Verwendung von einer gemeinsamen Kollimationslinse für beide Laser die Zahl der Freiheitsgrade für mögliche Toleranzen reduziert werden.

Als Lichtmuster kommen grundsätzlich alle Strukturen in Betracht, welche zur Bestimmung der Oberflächenkontur eines Objekts geeignet sind. Besonders bevorzugt wird als Lichtmuster ein Streifenmuster verwendet.

Die Auswertung gestaltet sich besonders einfach, wenn die auf ein zu prüfendes Objekt gestrahlten Lichtstreifen jeweils parallel und gleich beabstandet sind. Hierzu ist in apparativer Hinsicht von Vorteil, wenn ein Gehäuse vorhanden ist, in welchem eine Vielzahl von Sendemodulen jeweils gleich beabstandet und gleich ausgerichtet untergebracht werden kann.

In vorrichtungsmäßiger Hinsicht weisen die Sendemodule dann weiterhin zweckmäßig jeweils eine Zylinderlinse auf zum Bereitstellen eines auf ein Objekt zu strahlenden Lichtstreifens.

Als Lichtquellen können grundsätzlich alle Lichtquellen verwendet werden, welche die gewünschten Wellenlängen mit hinreichender Intensität emittieren. Besonders bevorzugt werden Laserdioden verwendet.

Als Strahlteiler können bevorzugt dichroitische Strahlteiler verwendet werden.

Eine größere Variabilität der Einsatzmöglichkeiten wird erzielt, wenn mehrere, insbesondere zwei, Detektoreinrichtungen vorhanden sind, mit denen verschiedene Wellenlängen des vom Objekt zurückgestrahlten Lichts nachweisbar sind.

Eine solche Vorrichtung gestattet Verfahrensvarianten, bei denen Licht von mindestens zwei verschiedenen Wellenlängen nachgewiesen wird. Weiterhin kann ermittelt werden, für welche Wellenlänge das Signal-Rausch-Verhältnis am größten ist und die Auswertung kann dann für die so ermittelte Wellenlänge durchgeführt werden.

Bei völlig unbekannter Oberflächenkontur des zu prüfenden Objekts kann es bei der Auswertung Mehrdeutigkeiten geben, da die von der ortsauflösenden Detektoreinrichtung gemessenen Strukturen nicht eindeutig Teillichtmustern zugeordnet werden können, welche die verschiedenen Sendmodule auf das zu prüfende Objekt strahlen. Die Zuordnung der Messdaten zu einem bestimmten Sendemodul oder einem bestimmten Lichtstreifen wird so deutlich vereinfacht und die Funktionalität der erfindungsgemäßen Vorrichtung und des erfindungsgemäßen Verfahrens zur dreidimensionalen Vermessung von Objekten wird deutlich gesteigert.

Um dies zu vermeiden, können zweckmäßig die verschiedenen Sendemodule zeitlich nacheinander, insbesondere einzeln, aktiviert werden. Beispielsweise können jeweils benachbart angeordnete Sendemodule nacheinander und zyklisch aktiviert werden. Vorrichtungsgemäß können die Sendermodule hierzu an einen Multiplexer angeschlossen sein.

Weitere Vorteile und Eigenschaften der erfindungsgemäßen Vorrichtung und des erfindungsgemäßen Verfahrens werden mit Bezug auf die beigefügten schematischen Figuren beschrieben.

Hierin zeigt:
- Figur 1: ein erstes Ausführungsbeispiel eines Sendemoduls für eine erfindungsgemäße Vorrichtung zusammen mit einer Detektoreinrichtung;
- Figur 2: ein zweites Ausführungsbeispiel eines Sendemoduls für eine erfindungsgemäße Vorrichtung zusammen mit einer Detektoreinrichtung;
- Figur 3: ein Ausführungsbeispiel einer erfindungsgemäßen Vorrichtung;
- Figur 4: ein weiteres Ausführungsbeispiel einer erfindungsgemäßen Vorrichtung.

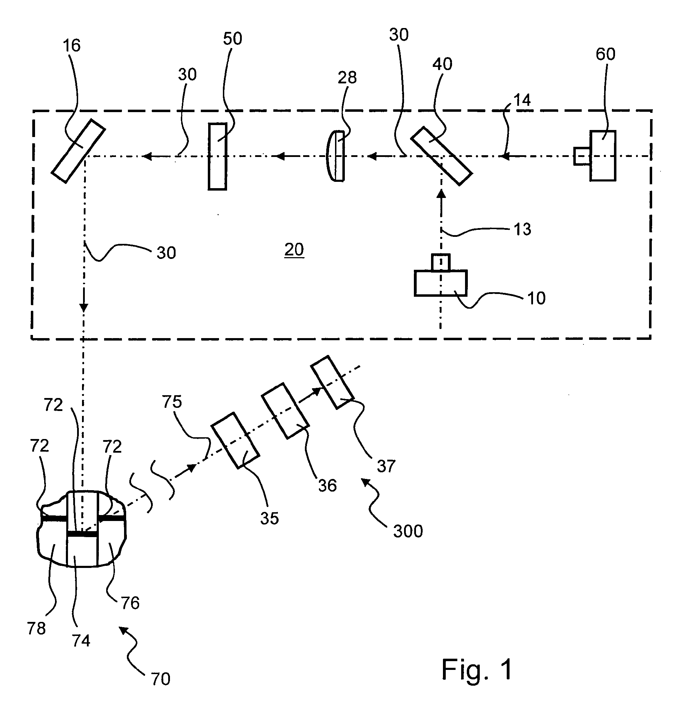

Eine erste Ausführungsvariante eines Sendemoduls 20 für eine erfindungsgemäße Vorrichtung wird mit Bezug auf Figur 1 beschrieben. Äquivalente Komponenten sind in allen Figuren mit denselben Bezugszeichen versehen.

Als wesentliche Bestandteile weist das Sendemodul 20 aus Figur 1 zunächst eine erste Laserdiode 10 als erste Lichtquelle und eine zweite Laserdiode 60 als zweite Lichtquelle auf. Sodann sind ein dichroitischer Strahlteiler 40, eine Kollimationslinse 28, eine Zylinderlinse 50 und Spiegel 16 vorhanden. Diese Komponenten sind in einem nicht mehr dargestellten Gehäuse untergebracht.

In gezeigtem Beispiel sendet die erste Laserdiode 10 rotes Licht 13 und die zweite Laserdiode 60 infrarotes Licht 14 aus. Über den Strahlteiler oder Teilerspiegel 40 wird das rote Licht 13 und das Infrarotlicht 14 auf einen gemeinsamen Strahlengang 30 vereinigt und mit Hilfe der Kollimationslinse 28 auf die Zylinderlinse 50 geleitet, welche das bis dahin rotationssymmetrische Strahlprofil zu einem Streifenprofil umformt. Über den Spiegel 16 wird dieses Streifenprofil sodann umgelenkt und auf ein in Figur 1 schematisch dargestelltes Objekt 70 gestrahlt. Da nur eine einzige Zylinderlinse 50 in dem Sendemodul 20 zur Strahlaufweitung verwendet wird, können hierdurch die Freiheitsgrade für eventuelle Toleranzen weiter reduziert werden. Durch die Umlenkung des Lichtstrahls mit Hilfe des Spiegels 16 wird insgesamt der optische Weg bis zu einem Objekt vergrößert. Bei gleicher Länge eines auf ein Objekt zu strahlenden Lichtstreifens kann durch die Strahlumlenkung außerdem der Divergenzwinkel des Strahlenbündels reduziert und damit die Homogenität der Ausleuchtung des Lichtstreifens gesteigert werden.

Bei diesem zu prüfenden Objekt 70 handelt es sich um einen Ausschnitt des Bereichs eines Türspalts 74 zwischen einer Kfz-Tür 76 und einer Kfz-Karosserie 78. Schematisch dargestellt ist der Verlauf eines auf diesen Bereich gestrahlten Lichtstreifens 72. Der Verlauf dieses Lichtstreifens 72, der im gezeigten Beispiel für einen Nutzer als roter Lichtstreifen sichtbar ist und der wegen des gleichen Strahlengangs 30 auch als Infrarotlicht auf das Objekt 70 gestrahlt wird, wird mit einer ebenfalls schematisch dargestellten Detektoreinrichtung 300 nachgewiesen.

Nach Durchtritt durch ein Empfangsobjektiv 35 tritt das von dem zu prüfenden Objekt 70 zurückgestrahlte Licht 75 durch einen Bandpassfilter 36, der im Wesentlichen nur den infraroten Anteil des Lichts zum Detektor oder Bildaufnehmer 37 durchlässt. Bei dem Detektor oder Bildaufnehmer 37 kann es sich beispielsweise um einen zweidimensionalen CCD- oder CMOS-Chip handeln.

Infrarotlaser sind für die Anwendung auf lackierten Oberflächen, beispielsweise auch lackierte Autotüren, besonders gut geeignet. Außerdem kann mit Hilfe des Bandpassfilters 36, bei dem es sich um einen Infrarot-Durchlassfilter oder allgemein um einen Bandpassfilter zweiter Ordnung, handeln kann, das Signal-Rausch-Verhältnis deutlich gesteigert werden und die Anwendung wird so weitgehend unabhängig von Tageslichteinflüssen.

Wesentlich für das Messprinzip ist, dass die Richtung, in welcher das Lichtmuster auf das zu prüfende Objekt 70 eingestrahlt wird, nicht mit der Detektionsrichtung zusammenfällt. Dies bedeutet, dass eine Triangulationsmessung durchgeführt wird. Beispielsweise führt dieser Winkelversatz zwischen der Einstrahl- und der Beobachtungsrichtung bei außerdem geeigneter relativer Ausrichtung der erfindungsgemäßen Vorrichtung zu dem zu prüfenden Türspalt dazu, dass der in Figur 1 schematisch gezeigte Lichtstreifen 72 im Bereich des Türspalts 74 einen Sprung nach unten aufweist. Aus dem Verlauf dieses Sprungs kann die Oberflächenkontur und damit die Breite des Türspalts 74 bestimmt werden.

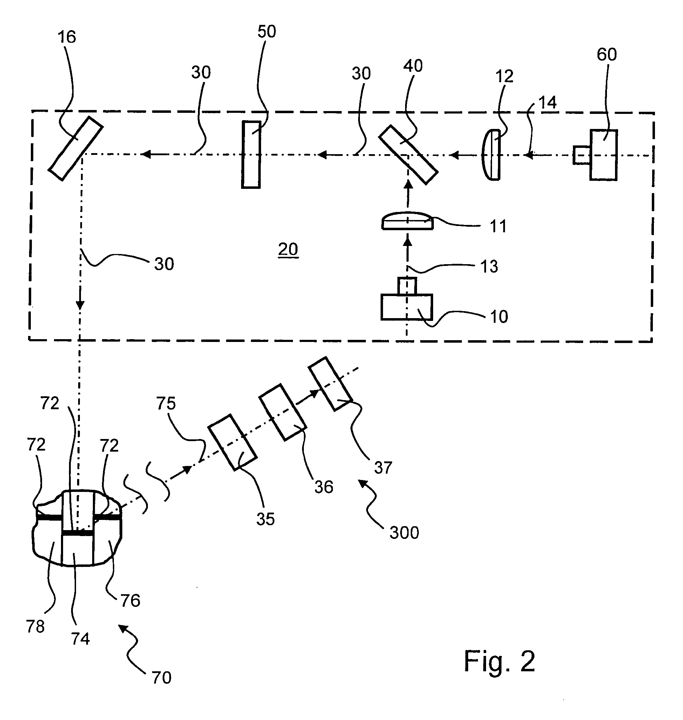

Das in Fig. 2 gezeigte Ausführungsbeispiel unterscheidet sich von der in Fig. 1 gezeigten Variante nur dadurch, dass für die erste Laserdiode 10 und die zweite Laserdiode 60 jeweils eine separate Kollimationslinse 11, 12 vorhanden ist. Im Übrigen entspricht dieses Ausführungsbeispiel der in Fig. 1 gezeigten Situation.

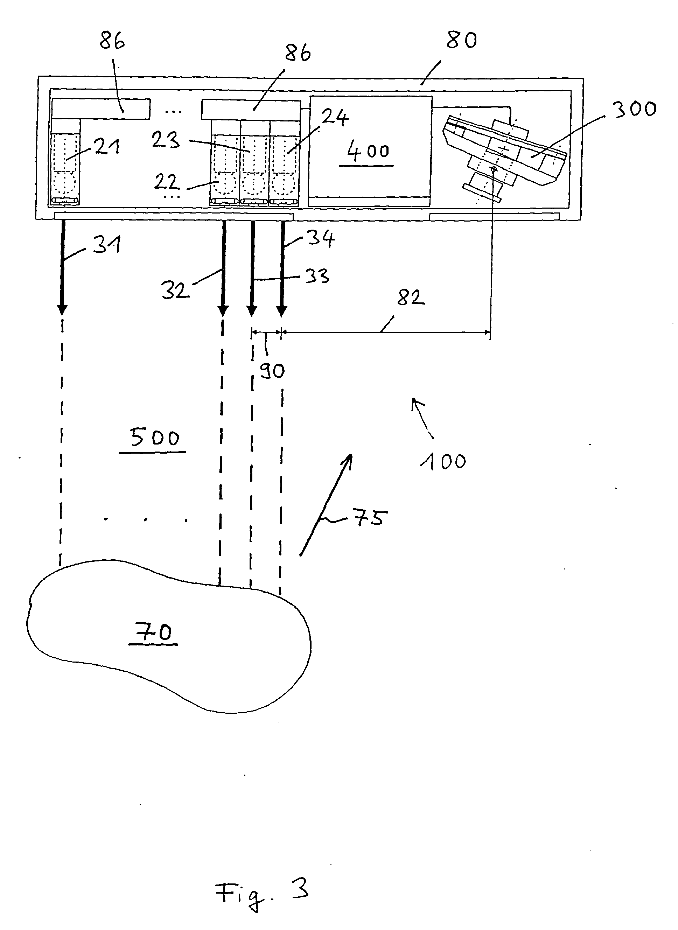

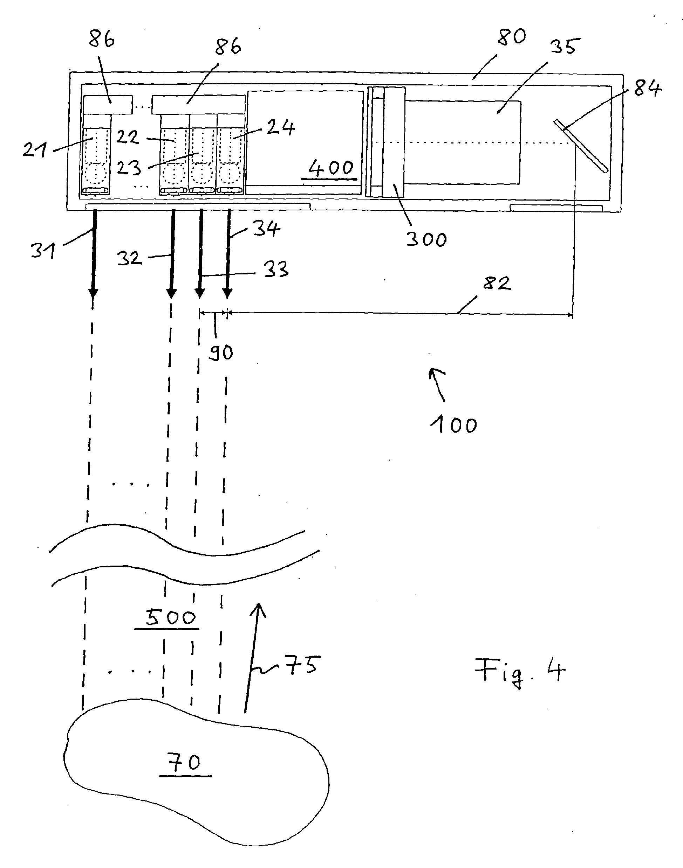

Zwei Ausführungsbeispiele einer erfindungsgemäßen Vorrichtung 100 werden mit Bezug auf die Figuren 3 und 4 beschrieben. Bei beiden Varianten sind jeweils eine Mehrzahl von Sendemodulen 21-24, die beispielsweise gemäß der in Fig. 1 dargestellten Ausführungsform aufgebaut sein können, in einem Gehäuse 80 untergebracht. Zwischen den Sendemodulen 21 und 22 befinden sich in Wirklichkeit weitere Sendemodule, die in den Figuren 3 und 4 zur besseren Übersichtlichkeit durch Punkte repräsentiert sind. Durch diese Punkte wird angedeutet, dass die Gesamtzahl der Sendemodule prinzipiell variabel und grundsätzlich auch sehr groß sein kann. Die Sendemodule 21-24 sind n dem Gehäuse 80 jeweils gleich beabstandet und gleich ausgerichtet angeordnet. Das heißt, dass die optischen Achsen 31-34 jeweils parallel und in gleichem Abstand 90 verlaufen. Der Abstand 90, der im Wesentlichen durch die Breite der Sendemodule 21-24 gegeben ist, kann typischerweise 10 mm betragen, wobei dann auf ein zu prüfendes Objekt 70 parallele und jeweils 10 mm beabstandete Lichtstreifen gestrahlt werden.

Die Sendemodule 21-24 sind an ein schematisch dargestelltes Bussystem 86 angeschlossen, welches seinerseits mit einer Steuer- und Auswerteeinheit 400 verbunden ist. Die Gesamtzahl der Sendemodule ist im Grundsatz nur durch die Möglichkeiten des Bussystems und das Fassungsvermögen des Gehäuses 80 begrenzt.

Das von dem zu prüfenden Objekt 70 zurückgestrahlte Licht 75 wird jeweils mit einer Detektoreinrichtung 300 nachgewiesen, die ebenfalls mit der Steuer- und Auswerteeinheit 400 verbunden ist. Durch den Abstand der Detektoreinrichtung 300 von den Sendemodulen 21-24 ist eine Basisweite 82 gegeben, welche zur Realisierung der Triangulationsmessung aus geometrischen Gründen umso größer sein muss, je weiter das zu prüfende Objekt 70 vom Sensor 100 entfernt ist. Diesen Gesichtspunkt betreffen die Unterschiede der in Fig. 3 und Fig. 4 dargestellten Varianten der erfindungsgemäßen Vorrichtung.

Das Ausführungsbeispiel in Fig. 3 weist eine im rechten äußeren Bereich des Gehäuses 80 angeordnete Detektoreinrichtung 300 auf, die deren optische Achse in Richtung eines Überwachungsbereichs 500 geneigt ist.

Eine im Vergleich zu der Anordnung in Fig. 3 größere Basisweite 82 wird mit der in Fig. 4 dargestellten Variante erreicht. Mit dem in Fig. 4 gezeigten Ausführungsbeispiel können deshalb auch Objekte in größerer Entfernung geprüft werden. Dies wird dadurch erreicht, dass das von dem zu prüfenden Objekt 70 zurückgestrahlte Licht über einen Spiegel 84 auf die Detektoreinrichtung 300 geleitet wird. Wegen der größeren Entfernung und der deshalb kleineren Winkel ist zur Erzielung derselben lateralen Auflösung ein größeres Objektiv 35 erforderlich. Die Umlenkung des Strahls durch den Spiegel 34 bringt als weiteren Vorteil mit sich, dass dieses größere Objektiv 35 im Vergleich zu der in Fig. 3 gezeigten Anordnung um 90° gedreht in das Gehäuse 80 eingebaut werden kann, was wegen der größeren Basisweite 82 unaufwändig möglich ist.

Mit der vorliegenden Erfindung wird ein verbesserter Lichtschnitt-Sensor und ein verbessertes Verfahren zur Orts- und/oder Formbestimmung von Objekten bereitgestellt, welche unabhängig von einer Farbe eines Objekts eine zuverlässige Prüfung ermöglichen. Eine besonders vorteilhafte Anwendung findet die Erfindung bei der Vermessung des Türspalts bei der Montage von Kfz-Türen in die Karosserie. Wegen der beschriebenen vorteilhaften Eigenschaften kann dies mit Hilfe der Erfindung bereits mit lackierten Komponenten erfolgen.

## Patentansprüche

1. Vorrichtung zur Orts- und/oder Formbestimmung eines Objekts in einem Überwachungsbereich nach dem Prinzip des Lichtschnitts, insbesondere zur Durchführung des Verfahrens nach einem der Ansprüche 11 bis 15,
mit einer Mehrzahl von Sendemodulen (20-24) zum Strahlen eines Lichtmusters (72) auf ein zu überprüfendes Objekt (70),
mit mindestens einer ortsauflösenden Detektoreinrichtung (300) zum Nachweisen von von dem Objekt (70) zurückgestrahltem Licht (75),
mit einer Steuer- und Auswerteeinrichtung (400) zum Ansteuern der Sendemodule (20-24) und zum Auswerten des von der Detektoreinrichtung (300) nachgewiesenen Lichts,
**dadurch gekennzeichnet,**
**dass** die Sendemodule (20-24) jeweils mindestens zwei Lichtquellen (10, 60) aufweisen, die Licht (13, 14) mit unterschiedlicher Wellenlänge aussenden, dass die Sendemodule (20-24) zum Vereinigen des Lichts (13, 14) der Lichtquellen (10, 60) auf einen gemeinsamen Strahlengang (30) jeweils mindestens einen Strahlteiler (40) aufweisen und
**dass** zum Leiten des Lichts (13, 14) der verschiedenen Lichtquellen (10, 60) auf dem gemeinsamen Strahlengang (30) in den Überwachungsbereich (500) und zum Bilden des Lichtmusters (72) optische Strahlformungs- und/oder Strahlumlenkmittel (50) vorhanden sind.

2. Vorrichtung nach Anspruch 1,
**dadurch gekennzeichnet,**
**dass** jedes der Sendemodule (20-24) eine Lichtquelle, die nichtsichtbares Licht aussendet, und eine Lichtquelle, die sichtbares Licht aussendet, aufweist.

3. Vorrichtung nach Anspruch 2,
**dadurch gekennzeichnet,**
**dass** die Lichtquellen, die nichtsichtbares Licht aussenden, Infrarot- oder Ultraviolett-Lichtquellen sind.

4. Vorrichtung nach einem der Ansprüche 1 bis 3,
**dadurch gekennzeichnet,**
**dass** vor der Detektoreinrichtung (300) zum selektiven Nachweis einer Wellenlänge ein wellenlängenselektiver Bandpassfilter (36) angeordnet ist.

5. Vorrichtung nach einem der Ansprüche 1 bis 4,
**dadurch gekennzeichnet,**
**dass** in den Sendemodulen (20-24) jeweils eine dem Strahlteiler (40) nachgeordnete Kollimationslinse (28) vorhanden ist.

6. Vorrichtung nach einem der Ansprüche 1 bis 5,
**dadurch gekennzeichnet,**
**dass** die Sendemodule (20-24) zum Bereitstellen eines auf ein Objekt (70) zu strahlenden Lichtstreifens (72) jeweils eine Zylinderlinse (50) aufweisen.

7. Vorrichtung nach einem der Ansprüche 1 bis 6,
**dadurch gekennzeichnet,**
**dass** die Strahlteiler (40) die dichroitische Strahlteiler sind.

8. Vorrichtung nach einem der Ansprüche 1 bis 7,
**dadurch gekennzeichnet,**
**dass** die Lichtquellen Laserdioden (10, 60) sind.

9. Vorrichtung nach einem der Ansprüche 1 bis 8,
**dadurch gekennzeichnet,**
**dass** mehrere, insbesondere zwei, Detektoreinrichtungen vorhanden sind, mit denen verschiedene Wellenlängen des vom Objekt (70) zurückgestrahlten Lichts (75) nachweisbar sind.

10. Vorrichtung nach einem der Ansprüche 1 bis 9,
**dadurch gekennzeichnet,**
**dass** ein Gehäuse (80) vorhanden ist, in welchem mehrere Sendemodule (20-24) jeweils gleich beabstandet und gleich ausgerichtet untergebracht werden können.

11. Verfahren zur Orts- und/oder Formbestimmung eines Objekts in einem Überwachungsbereich nach dem Prinzip des Lichtschnitts,
bei dem mit einer Mehrzahl von Sendemodulen (20-24) ein Lichtmuster (72) auf ein zu prüfendes Objekt (70) in einem Überwachungsbereich (500) gestrahlt wird,
bei dem von dem Objekt (70) zurückgestrahltes Licht (75) mit mindestens einer ortsauflösenden Detektoreinrichtung (300) nachgewiesen wird und
bei dem auf Grundlage des nachgewiesenen Lichts nach dem Prinzip des Lichtschnitts eine Oberflächenkontur des Objekts (70) bestimmt wird,
**dadurch gekennzeichnet,**
**dass** die Sendemodule (20-24) jeweils Licht (13, 14) mit mindestens zwei verschiedenen Wellenlängen aussenden und
**dass** das Licht (13, 14) mit den mindestens zwei verschiedenen Wellenlängen auf einem gemeinsamen Strahlengang (30) auf das Objekt (70) geleitet wird.

12. Verfahren nach Anspruch 11 oder 12,
**dadurch gekennzeichnet,**
**dass** nur nichtsichtbares Licht nachgewiesen und für die Auswertung verwendet wird.

13. Verfahren nach Anspruch 11 oder 12,
**dadurch gekennzeichnet,**
**dass** Licht von mindestens zwei verschiedenen Wellenlängen nachgewiesen wird,
**dass** ermittelt wird, für welche Wellenlänge das Signal-Rausch-Verhältnis am größten ist und
**dass** die Auswertung für die so ermittelte Wellenlänge durchgeführt wird.

14. Verfahren nach einem der Ansprüche 11 bis 13,
**dadurch gekennzeichnet,**
**dass** als Lichtmuster ein Streifenmuster verwendet wird.

15. Verfahren nach einem der Ansprüche 11 bis 14,
**dadurch gekennzeichnet,**
**dass** die verschiedenen Sendemodule (20-24) zeitlich nacheinander aktiviert werden.
